# EUROPEAN PATENT APPLICATION

(11) **EP 2 698 996 A2**
(43) Date of publication of application: **19.02.2014**
(21) Application number: 13002520.8
(22) Date of filing: 14.05.2013
(51) Int. Cl.: H04N 7/26

(54) **Decoder and method**

(30) Priority: 13.08.2012 GB 201214400; 13.08.2012 US 201213584047
(71) Applicant: Gurulogic Microsystems OY, 20100 Turku (FI)
(72) Inventor: Kärkkäinen, Tuomas, 20230 Turku (FI); Kalevo, Ossi, 37800 Toijala (FI)
(74) Representative: Norris, Timothy Sweyn

(57) **Abstract**

A decoder (10) decodes input data (20) to generate corresponding decoded output data (30). The decoder (10) includes data processing hardware which is operable:
(a) to process the encoded input data (20) to extract therefrom header information indicative of encoded data pertaining to blocks and/or packets included in the encoded input data (20), the header information including data indicative of one or more transformations employed to encode and compress original block and/or packet data for inclusion as the encoded data pertaining to the blocks and/or packets;
(b) to prepare a data field in a data storage arrangement for receiving decoded block and/or packet content;
(c) to retrieve information describing the one or more transformations and then applying an inverse of the one or more transformation for decoding the encoded and compressed original block and/or packet data to generate corresponding decoded block and/or packet content for populating said data field; and
(d) when the encoded input data has been at least partially decoded, to output data from the data field as the decoded output data (30).

Optionally, the decoder (10) is operable to fetch supplementary information from a database arrangement for use when executing the inverse of one or more transformations, said supplementary information including at least one of: algorithms, rules, one or more transformation parameters. Optionally, the decoder is operable to split and/or combine blocks and/or packets in the data field according to splitting and/or combining information included in the encoded input data (20). The encoded data optionally includes at least one of: image data, video data, audio data, economic data, mask data, seismographic data, analog-to-digital (ADC) converted data, biomedical signal data, textural data, calendar data, mathematical data but not limited thereto. The decoder (10) is beneficially employed in electronic consumer products operable to receive and/or store input data.

## Description

### Technical Field

The present disclosure relates to decoders for receiving encoded input data and decoding the input data to generate corresponding decoded output data. Moreover, the present disclosure also concerns methods of decoding encoded input data to generate corresponding decoded output data. Furthermore, the present disclosure also concerns software products recorded on non-transitory machine-readable data storage media, wherein the software products are executable upon computing hardware for implementing aforesaid methods.

### Background

Data content is stored and communicated to an increasing extent by contemporary human population, for example multimedia content via Internet and wireless communication networks; such multimedia content often includes, for example images, video and audio, but is not limited thereto. The data content is stored and communicated between devices, software applications, media systems and data services. During such storage and communication, situations arise where images and video are captured, scanned, transmitted, shared, watched and printed. However, such images and videos are demanding in respect of data memory capacity and communication system bandwidth utilized. When communication system bandwidth is limited, such images and videos take significant time to communicate. For addressing such storage requirements, it has been customary practice to employ image and video encoding methods which also provide a degree of data compression. Some contemporary encoding standards for images and video are provided in Table 1.

**Table 1: contemporary encoding standards**

| | | | | |
|---|---|---|---|---|
| JPEG | MPEG-1 | H.261 | WebP | Lucid |
| JPEG2000 | MPEG-2 | H.263 | WebM | GIF |
| JPEG XR | MPEG-4 | H.264 | | PNG |
| | MPEG-4 AVC | HEVC | | TIFF |
| | MPEG-4 MVC | | | BMP |
| | MP3 | | | VC-1 |
| | | | | Theora |
| | | | | AAC |
| | | | | FLAC |
| | | | | Ogg Vorbis |
| | | | | Speex |

Image and audio files are becoming larger as image quality is progressively improved, for example by adoption of high definition (HD) standards and high dynamic range (HDR). However, 3-dimensional (3-D) images, videos and audio are gaining increasing popularity which demands correspondingly more efficient encoding and decoding methods in encoders and decoders, namely "codecs", to cope with associated increased quantities of data to be communicated and stored. However, it is highly desirable that encoding methods that provide a degree of data compression should be substantially lossless in relation to information content when generating the compressed data.

Conventional codecs are described in earlier published patent applications and granted patents, for example as in US5832130, US7379496 and US7676101. In general, known video codecs are not able to code efficiently extensive areas of images with substantially constant parameters whilst concurrently being able to encode highly spatially detailed areas of the images. It is customary practice to employ motion compensation in a form of prediction and prediction error coding methods based upon use of transformations, for example discrete cosine transform (DCT) and wavelet transformations. These transformations employ a process wherein portions of a given image, for example a still image or an image forming a part of a video sequence, are divided into blocks which are then subject to encoding processes. The blocks are, for example, 8 x 8 image elements, 4 x 4 image elements or similar. Such relatively smaller blocks are employed because larger sizes of blocks result in inefficient encoding processes, although 16 x 16 image element blocks are sometimes employed. According to contemporary known approaches to image encoding, when multiple different block sizes are used for encoding, it is customary practice to utilize a small variation in block sizes; moreover, block sizes are selected based upon how well movement can be compensated in an associated block area or based upon a encoding quality parameter, for example a target quality parameter. In general, higher encoded image quality requires smaller blocks which results in less data compression. Certain types of contemporary encoding can even results in an increase in data size, when error correction features such as parity codes and error correction codes are included.

From the foregoing, it will be appreciated that providing data compression of data content, for example images and videos but not limited thereto, whilst preserving data content quality is a contemporary problem which is not adequately addressed by known encoders and decoders, despite a large variety of codecs having been developed during recent decades.

In a published PCT application WO2010/039822 ("Video Coding Using Transforms Bigger than 4 x 4 and 8 x 8"; Applicant Qualcomm Inc.), there is described a video processing system, a method and a system for applying transforms larger than 8 x 8 and non-rectangular transforms, and generating transform size syntax elements indicative of the transforms for video decoding. The transform size syntax element is optionally generated by an encoder based on a prediction block size of a video block and the contents of the video block. Moreover, the transform size syntax element may be generated according to a set of rules to select from 4 x 4, 8 x 8, and larger transform sizes during an encoding process. A decoder optionally performs an inverse transform based on the transform size syntax element and the rules used by the encoder. The transform size syntax elements are optionally transmitted to the decoder as part of the encoded video bitstream.

### Summary

The present invention seeks to provide a decoder for decoding encoding input data and generating corresponding decoded output data, wherein the decoded output data is decompressed in relation to the encoded input data without any substantial loss of quality occurring during decoding; the encoded data is optionally any type of data, for example at least one of: image data, video data, audio data, economic data, mask data, seismographic data, analog-to-digital (ADC) converted data, biomedical signal data, textural data, calendar data, mathematical data, binary data but not limited thereto.

The present invention also seeks to provide a method of decoding encoding input data and generating corresponding decoded output data, wherein the decoded output data is decompressed in relation to the encoded input data without any substantial loss of quality occurring during decoding.

According to a first aspect, there is provided a method of decoding encoding input data as claimed in appended claim 1: there is provided a method of decoding encoded input data to generate corresponding decoded output data, characterized in that the method includes steps of:
(a) processing the encoded input data to extract therefrom header information indicative of encoded data pertaining to blocks and/or packets included in the encoded input data, the header information including data indicative of one or more transformations employed to encode and compress original block and/or packet data for inclusion as the encoded data pertaining to the blocks and/or packets;
(b) preparing a data field in a data storage arrangement for receiving decoded block and/or packet content;
(c) retrieving information describing the one or more transformations and then applying an inverse of the one or more transformations for decoding the encoded and compressed original block and/or packet data to generate corresponding decoded block and/or packet content for populating the data field;
(d) splitting and/or combining blocks and/or packets in the data field according to splitting and/or combining information included in the encoded input data;
(e) when the encoded input data has been at least partially decoded, outputting data from the data field as the decoded output data.

The invention is of advantage in that the method enables encoded input data to be decoded and decompressed in an efficient manner, without substantial loss of quality of content present in the encoded input data.

The encoded data is beneficially any type of data, for example including at least one of: image data, video data, audio data, economic data, mask data, seismographic data, analog-to-digital (ADC) converted data, biomedical signal data, textural data, calendar data, mathematical data but not limited thereto.

Optionally, the method includes providing the encoded data from at least one of following sources: a data memory device, via a communication network, a memory card, data memory disks, local area communication networks (LANs), directly from an encoder.

Optionally, the method includes fetching supplementary information from a database arrangement for use when executing the inverse of the one or more transformations, the supplementary information including at least one of: algorithms, rules, one or more transformation parameters.

Optionally, the method includes decoding blocks and/or packets including a temporal series of data content items, wherein sub-division of the blocks of a given data content item in the series is dependent upon content present in one or more data content items preceding the given data content item within the temporal sequence of data content items; optionally, the data content items includes at least one of: image data, video data, audio data, economic data, mask data, seismographic data, analog-to-digital (ADC) converted data, biomedical signal data, textural data, calendar data, mathematical data but not limited thereto.

More optionally, the method further includes retrieving header information from the encoded input data indicative of the database arrangement for enabling decoding of the encoded input data to access the supplementary information used when earlier encoding the input data.

Optionally, the method includes employing for the inverse of the one or more transformations inverses of one of more of: data base reference, DC-value, slide, scale, line, multilevel, unchanged, interpolation, extrapolation, DCT, pulse code modulation (PCM), DPCM, RLE, SRLE, EM, LZO, VLC, Huffman-coding, arithmetic coding, range coding, transform coding, delta coding, ODelta coding, bzip2-specific RLE.

Optionally, the method includes decoding at least one of: at least one of: image data, video data, audio data, economic data, mask data, seismographic data, analog-to-digital (ADC) converted data, biomedical signal data, textural data, calendar data, mathematical data, binary data, but not limited thereto.

According to a second aspect, there is provided a software product recorded on non-transitory machine-readable data storage media, characterized in that the software product is executable upon computing hardware for executing a method pursuant to the first aspect of the invention.

According to a third aspect, there is provided a software application for a mobile wireless communication device, characterized in that the software application includes a software product pursuant to the second aspect of the invention.

According to a fourth aspect, there is provided a decoder operable to decode input data to generate corresponding decoded output data, characterized in that the decoder includes data processing hardware which is operable:
(a) to process the encoded input data to extract therefrom header information indicative of encoded data pertaining to blocks and/or packets included in the encoded input data, the header information including data indicative of one or more transformations employed to encode and compress original block and/or packet data for inclusion as the encoded data pertaining to the blocks and/or packets;
(b) to prepare a data field in a data storage arrangement for receiving decoded block and/or packet content;
(c) to retrieve information describing the one or more transformations and then applying an inverse of the one or more transformations for decoding the encoded and compressed original block and/or packet data to generate corresponding decoded block and/or packet content for populating the data field;
(d) to split and/or combine blocks and/or packets in the data field according to splitting and/or combining information included in the encoded input data; and
(e) when the encoded input data has been at least partially decoded, to output data from the data field as the decoded output data.

The encoded data is beneficially any type of data, for example at least one of: image data, video data, audio data, economic data, mask data, seismographic data, analog-to-digital (ADC) converted data, biomedical signal data, textural data, calendar data, mathematical data, binary data, but not limited thereto.

Optionally, the decoder is implemented to receive the encoded data from at least one of following sources: a data memory device, via a communication network, a memory card, data memory disks, local area communication networks (LANs), directly from an encoder.

Optionally, the decoder is implemented such that the data processing hardware is implemented using computing hardware operable to execute a software product.

Optionally, the decoder is operable to use an inverse of the one or more transformations to decompress content associated with the blocks and/or packets, so that the decoded output data is larger in size than the encoded input data to be decoded.

Optionally, the decoder is implemented such that the blocks and/or packets are subdivided and/or combined so that at least one of their representative parameters describing their content is substantially flat within their sub-divided and/or combined blocks and/or packets. More optionally, when the decoder is in operation, the at least one parameter corresponds to a colour of the sub-divided and/or combined blocks.

Optionally, the decoder is implemented such that the blocks and/or packets include a series of data content items, wherein sub-division of the input data corresponding to a given data content item to form the plurality of corresponding blocks is dependent upon content present in one or more data content items preceding the given data content item within the temporal sequence of data content items; optionally, the data content items include at least one of: at least one of: image data, video data, audio data, economic data, mask data, seismographic data, analog-to-digital (ADC) converted data, biomedical signal data, textural data, calendar data, mathematical data but not limited thereto.

Optionally, the decoder is operable to retrieve header information to the transformed data to generate the decoded output data, wherein the header information includes information indicative of the one or more transformations employed by an encoder which generated the encoded input data.

Optionally, the decoder is operable to fetch supplementary information from a database arrangement for use when executing the inverse of one or more transformations, the supplementary information including at least one of: algorithms, rules, one or more transformation parameters. More optionally, the decoder is operable to retrieve header information from the encoded input data in a manner indicative of the database arrangement for enabling decoding of the encoded input data to access the supplementary information used when earlier encoding or decoding the encoded input data.

Optionally, the decoder is operable to employ for the inverse of one or more transformations inverses of one of more of: data base reference, DC-value, slide, scale, line, multilevel, unchanged, interpolation, extrapolation, DCT, pulse code modulation (PCM), DPCM, RLE, SRLE, EM, LZO, VLC, Huffman-coding, arithmetic coding, range coding, transform coding, delta coding, ODelta coding, bzip2-specific RLE.

Optionally, the decoder is operable to decode at least one of: at least one of: image data, video data, audio data, economic data, mask data, seismographic data, analog-to-digital (ADC) converted data, biomedical signal data, textural data, calendar data, mathematical data, binary data.

According to a fifth aspect, there is provided an electronic consumer product operable to receive and/or store input data, characterized in that the electronic consumer product includes a decoder pursuant to the fourth aspect for decoding the input data for generating decoded content for providing to at least one user of the consumer product.

Optionally, the electronic consumer product is at least one of: a mobile telephone, a cell phone, a tablet computer, a phablet computer, a television, a portable media playing device, a camera, a personal computer.

According to a sixth aspect, there is provided a method of decoding encoded input data to generate corresponding decoded output data, characterized in that the method includes steps of:
(a) processing the encoded input data to extract therefrom header information indicative of encoded data pertaining to blocks and/or packets included in the encoded input data, the header information including data indicative of one or more transformations employed to encode and compress original block and/or packet data for inclusion as the encoded data pertaining to the blocks and/or packets;
(b) preparing a data field in a data storage arrangement for receiving decoded block and/or packet content;
(c) retrieving information describing the one or more transformations and then applying an inverse of the one or more transformations for decoding the encoded and compressed original block and/or packet data to generate corresponding decoded block and/or packet content for populating the data field;
(d) fetching supplementary information from a database arrangement for use when executing the inverse of the one or more transformations, the supplementary information including at least one of: algorithms, rules, one or more transformation parameters; and
(e) when the encoded input data has been at least partially decoded, outputting data from the data field as the decoded output data.

According to a seventh aspect, there is provided a decoder operable to decode input data to generate corresponding decoded output data, characterized in that the decoder includes data processing hardware which is operable:
(a) to process the encoded input data to extract therefrom header information indicative of encoded data pertaining to blocks and/or packets included in the encoded input data, the header information including data indicative of one or more transformations employed to encode and compress original block and/or packet data for inclusion as the encoded data pertaining to the blocks and/or packets;
(b) to prepare a data field in a data storage arrangement for receiving decoded block and/or packet content;
(c) to retrieve information describing the one or more transformations and then apply an inverse of the one or more transformations for decoding the encoded and compressed original block and/or packet data to generate corresponding decoded block and/or packet content for populating said data field;
(d) to fetch supplementary information from a database arrangement for use when executing the inverse of one or more transformations, the supplementary information including at least one of: algorithms, rules, one or more transformation parameters; and
(e) when the encoded input data has been at least partially decoded, to output data from the data field as the decoded output data.

It will be appreciated that features of the invention are susceptible to being combined in various combinations without departing from the scope of the invention as defined by the appended claims.

### Description of the diagrams

Embodiments of the present disclosure will now be described, by way of example only, with reference to the following diagrams wherein:
- FIG. 1: is a schematic illustration of an embodiment of a decoder;

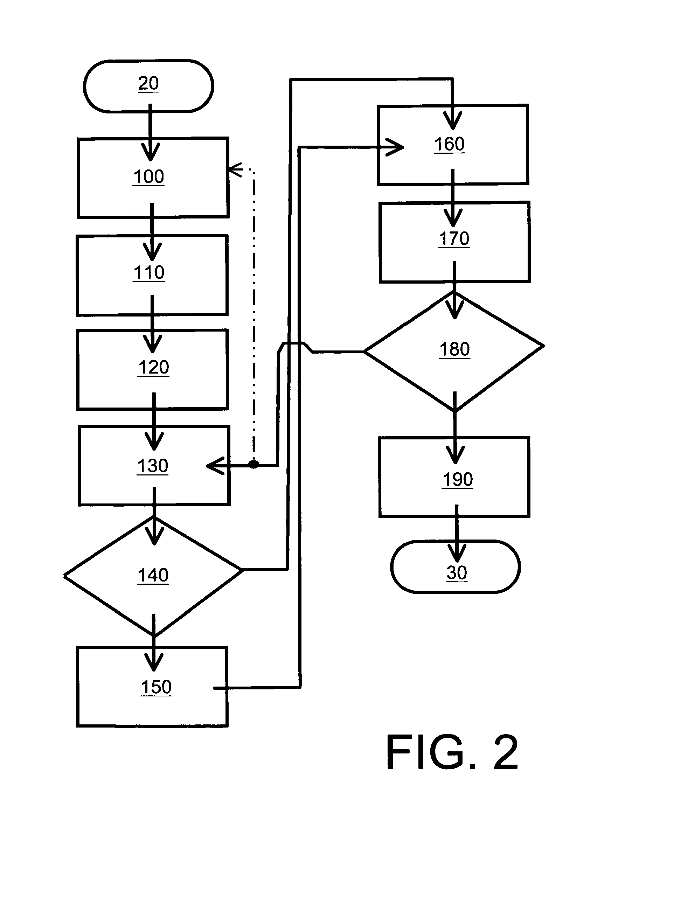

- FIG. 2: is a flow chart of steps of a method of decoding encoding input data representative of at least one data content item to generate corresponding decoded output data, wherein the decoded output data is decompressed relative to the encoded input data without substantial loss of data content quality occurring during decoding; the data content item beneficially includes at least one of: image data, video data, audio data, economic data, mask data, seismographic data, analog-to-digital (ADC) converted data, biomedical signal data, textural data, calendar data, mathematical data but not limited thereto; and
- FIG. 3: is an example partitioning of an image into areas corresponding to blocks for decoding using a method whose steps are illustrated in FIG. 2, although such partitioning is also applicable to other types of data content;
- FIG. 4: is an example of initial partitioning an example image to be decoded using methods of embodiments;
- FIG. 5: is example of partitioning of an image to be decoded using methods of embodiments;
- FIG. 6: is example of a decoded image; and
- FIG. 7: is an example device in which the decoding method can be executed.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### Description of embodiments

In overview, the present invention is concerned with decoders and associated methods of decoding encoding input data to generate corresponding decoded output data. The encoded data is optionally any type of data, for example at least one of: image data, video data, audio data, economic data, mask data, seismographic data, analog-to-digital (ADC) converted data, biomedical signal data, textural data, calendar data, mathematical data, binary data but not limited thereto. The method is concerned with receiving encoded input data, for example, representative of one or more images and/or one or more audio signals, and then processing the encoded input data by executing steps of:
(i) interpreting header information included in the encoded input data;
(ii) identifying block and/or packet information present within the encoded input data;
(iii) populating a data field with blocks and/or packets corresponding to the identified block or packet information;
(iv) identifying one or more transformations which have been used to generate the block and/or packet information; and
(v) applying an inverse of the identified one or more transformations to decode the block and/or packet information to generate decoded data to populate the data field with decoded block or packet information, thereby providing the aforesaid decoded output data.

Optionally, after having executed the step (iii), if it is found in the input encoded data that a given block or packet has been split and/or combined, the populated blocks or packets in the data field are correspondingly split and/or combined; such a feature enables the data field to be configured with an arbitrary template of blocks or packets which are subsequently amended, for example appropriately split and/or combined, during decoding of the encoded input data.

During earlier encoding to generate the encoded input data by utilizing an encoding method implemented in an encoder, a selection of the blocks is determined by an ease with which areas corresponding to the blocks can be encoded; for example, larger blocks are employed for areas of the one or more images which have a substantially constant associated parameter value, namely are "flat", and smaller blocks are employed for areas of the one or more images which are difficult to encode on account of relatively abrupt spatial changes in associated parameter values for the areas. The parameters optionally pertain to one or more of: colour, illumination, sliding parameter value, repetitive pattern. Easy encoding corresponds, for example, to at least one parameter associated with a given area being substantially constant within the given area, for example substantially constant given colour, amplitude, strength, number, or code within the given area. Moreover, the encoding method also employs larger blocks for stationary areas in video sequences of images, or to groups of areas in the video sequences of images that are moving similarly, namely blocks which correspond to fixed objects. The blocks are optionally rectilinear in relation to areas of the one or more images which they represent, for example 64 x 64 elements, 32 x 16 elements, 4 x 20 elements, 10 x 4 elements, 1 x 4 elements, 3 x 1 elements, 8 x 8 elements, 1 x 1 element and so forth; optionally, the elements correspond to pixels present in the one or more images, but can be subject to scaling operations during encoding, namely each element corresponding to a corresponding plurality of pixels.

However, other shapes of blocks are optionally employed, for example elliptical blocks, circular blocks and so forth. Moreover, by analogy, the encoding method can also be applied to encode one or more audio signals, wherein the one or more audio signals are subdivided and/or combined into packets of variable temporal length, depending upon a nature of the audio signals corresponding thereto, and the packets are then encoded to generate encoded compressed output data; the packets are synonymous with aforesaid blocks but pertain to audio rather than image information. The encoding method is capable of concurrently encoding both audio information and image information, for example as in multimedia content. However, it will appreciated that embodiments of the present invention are not limited to processing image, video and/or audio data, but can be applied to other types of data content items, for example at least one of: image data, video data, audio data, economic data, mask data, seismographic data, analog-to-digital (ADC) converted data, biomedical signal data, textural data, calendar data, mathematical data, binary data but not limited thereto.

During processing of the areas of the one or more images, alternatively or additional other types of data content items, into corresponding blocks, the encoding method includes checking a quality of representation of information provided by the blocks relative to corresponding detail in the one or more images to compute a corresponding quality index; in an event that the computed quality index indicates, when compared against a reference quality threshold, that a selection of block sizes has been employed such that the quality of representation of data provided by the blocks is insufficient, the encoding method iterates back and uses progressively smaller blocks, alternatively progressively larger blocks by way of combining, if it improves the compression efficiency and does not deteriorate the reconstruction significantly, until the quality index indicates that the quality of representation is met as defined by the reference quality threshold. By such an approach, it is feasible to achieve data compression during encoding which is substantially lossless, depending upon choice of threshold value for the quality of representation of information. Optionally, the reference quality threshold is made dynamically variable, depending upon content present in the one or more images; for example, when the one or more images are a part of video sequence where there is rapid chaotic activity, the reference quality threshold can be relaxed during the chaotic activity for enabling an enhanced degree of data compression to be achieved. The chaotic activity can be, for example, random features such as flowing turbulent water, flames, falling snow, billowing smoke, ocean waves and so forth, wherein loss of information is not readily discernible when the encoded data is subsequently decoded in a decoder.

Determination of blocks in the aforesaid encoder can be optionally based upon one or more criteria as listed in Table 2.

**Table 2: Split selection and/or combining selection of blocks during image encoding**

| Criterion number | Criterion |
|---|---|
| | |
| 1 | Variance or standard deviation of block data as derived from a corresponding area of an input image |
| 2 | Mean or sum of an absolute difference between data represented by a given block and a prediction of its value |
| 3 | Variance or standard deviation of an absolute difference between data represented by a given block and a prediction of its value |
| | |

Optionally, predictions in Table 2 are based upon known rules employed when encoding one or more images. Alternatively, the predictions in Table 2 are based upon provided configuration information, for example as provided from selected database references, from prediction directions, from movements of block coordinates within the one or more images, and so forth. A use of a variance or a standard deviation is an approach employed to provide compression of information by describing a mutual relationship of elements included within a given corresponding block. In many situations, predictions of block data with associated encoding is itself sufficient when performing encoding, but it is optionally desirable to include code prediction error data within the prediction to improve an accuracy of the prediction. In a simple example of encoding, a simple data prediction method is employed, for example a mean value, namely "DC" value, of pixels or elements within a given block to be delivered in the encoded output data.

Splitting areas, alternatively combining areas, of one or more images provided as input data to an encoder implementing the aforesaid method is optionally implemented according to any manner which provides both compression and also substantially maintains image quality, namely is substantially lossless during encoding. The encoding method applies various strategies to such splitting and/or combining of areas. For example, if a given block includes considerable information, it is optionally split into a plurality of corresponding smaller blocks, alternatively optionally combined into corresponding larger blocks, that are relatively "flat", namely substantially constant, in relation to their content such that they individually include relatively little information. When the encoding method is applied to at least one or more images and/or one or more audio signals, encoding quality and encoding inaccuracies in the encoded output data are optionally employed to control a manner in which splitting, alternatively combining, up of input images and audio input signals into blocks and packets respectively occurs. However, it will be appreciated that other types of data content items can be processed in a similar manner, for example at least one of: image data, video data, audio data, economic data, mask data, seismographic data, analog-to-digital (ADC) converted data, biomedical signal data, textural data, calendar data, mathematical data but not limited thereto.Optionally, when a given input image is split, alternatively combined, into areas and corresponding blocks, the encoding method analyses the blocks thereby generated to determine whether or not any of the blocks can be combined together, subject to aforesaid quality criteria, in order to obtain a greater degree of data compression in the encoded output data. In the foregoing, the encoded output data includes information associated with the blocks which defines locations of their corresponding areas in their original images in the input data to be encoded.

The method beneficially employs multiple coding and entropy modifying methods, namely transformations, when coding and compressing data describing blocks of data. For example, different transformations are used for different blocks of a given image, when favourable coding and compression performance is thereby achieved, depending upon information content of the different blocks. Beneficially, RD optimization is employed as a quality criterion when processing the blocks of data. Information describing the plurality of transformations employed when coding the blocks is communicated in the encoded output data; this information is either intrinsically included in the encoded output data, or the output data includes a reference to one or more databases for where information describing the transformations utilized can be obtained. Coding methods that are beneficially employed include one or more of: multilevel, line, scale, slide, interpolation, extrapolation, unchanged, motion estimation, SRLE, EM, Odelta and range coding, as will be elucidated in greater detail later. Splitting of Init-blocks is also optionally beneficially employed.

When encoding the one or more images present in the input data to be encoded using the method, data associated with the input images is beneficially down-sampled, for example down-sampled in ratios of 2 x 1: 1, 2 x 2 : 1, 1 x 2 : 1, 4 x 1 : 1, or similarly quantized prior to being subject to aforementioned encoding methods. Optionally, such down-sampling is performed in response to a desired quality of encoding desired in the compressed encoded output data generated from applying encoding methods. Optionally, larger blocks processed by the encoding method are less quantized than smaller blocks; in other words, a degree of quantization employed is optionally decreased as block sizes are increased. Optionally, during encoding, a scaling factor for down-sampling employed, is made dynamically variable, for example in response to a nature of content in a sequence of images, for example video, to be encoded.

During encoding of blocks pursuant to the encoding method, each block has various parameters which describe its contents. These parameters are conveyed when encoding via various "channels". For example, colour channels describing blocks of an image can include one or more of: black/white (B/W), Y, U, V, red (R), green (G), blue (B), Cyan (C), Magenta (M), Y and K. Moreover, the input images for encoding and the blocks can be optionally processed when executing the encoding method using a variety of potential colour or pixels formats, for example Y, YUV420, YUV422, YUV444, RGB444, G and CMYK contemporary standards and formats. Moreover, the format is optionally planar, interleaved, line planar and so forth. Moreover, the encoding method is beneficially operable to change format of images and/or blocks when performing encoding activities; for example, an original image is in an interleaved RGB format and is encoded using methods of encoding to generate encoded output data in YUV420 format or *vice versa.*

Bit depth, namely dynamic range of a pixel when implementing the aforesaid encoding method, is beneficially in a range of 1-bit to 64-bit resolution. Optionally, different pixel colours or audio channels can be encoded with mutually different resolutions, provided that encoding quality criteria and compression performance of the encoding methods is satisfied.

The encoding methods are optionally implemented using encoding parameters and encoding rules and/or tables which are stored on a database and which are accessed when performing encoding activities. Optionally, the database is created during the encoding process and delivered for use when implementing the method via an encoder. For example, motion compensation during encoding is beneficially implemented using delivered databases of information to the encoder. Beneficially, the encoder is operable to encode original pixel information present in the input data and/or encode prediction error information. Using database information when encoding input data to generate corresponding encoded output data enables the encoder to adapt to revisions in encoding standards of parameters, tables and similar utilized for encoding. Coding approaches which can be adopted when implementing the encoding methods optionally include one or more of: data base reference, DC-value, slide, scale, line, multilevel, unchanged, interpolation, extrapolation, DCT, pulse code modulation (PCM), DPCM, RLE, SRLE, EM, LZO, VLC, Huffman-coding, arithmetic coding, range coding, transform coding, delta coding, ODelta coding, bzip2-specific RLE. Optionally, the coding approaches including any combination of aforementioned examples of coding. When a coding approach such as Huffman encoding is employed, such coding beneficially uses fixed tables of encoding parameters or delivered tables of coding parameters. The encoder is beneficially implemented using computing hardware having data storage arrangements, wherein optimized tables of encoding parameters can be stored in the data storage arrangements for future use when performing encoding operations. Beneficially, reference addresses for enabling a decoder to access databases for obtaining suitable parameters for decoding the encoded output data from the encoder are included in the encoded output data. Optionally, the databases are accessible via a communication network, for example via Internet. Optionally, the databases are supported via cloud computing arrangements. When the method implemented in the encoder utilizes mathematically generated databases, the databases can optionally be DC value, 1D/2D-linear transition, 1 D/2D-curved transition, a 1 D/2D transformation function or some known image block or audio packet structure.

The method of encoding when executed on an encoder is operable to encode input data to generate encoded output data, wherein the encoded output data can be output as a bit stream, alternatively stored in data storage media, for example as a data file. Moreover, the encoding method is capable of being utilized in a range of possible applications; beneficially, a header for video, image, image block, audio or audio packets beneficially includes supplementary information, such as version number, size of data for the video, image or packet, quality factor threshold employed when encoding, maximum block or packet size, encoding approaches applied, tables of encoding parameters, and any other information for assisting subsequent decoding processes. Similar considerations pertain for all types in data content to be encoded, for example at least one of: image data, video data, audio data, economic data, mask data, seismographic data, analog-to-digital (ADC) converted data, biomedical signal data, textural data, calendar data, mathematical data, binary data but not limited thereto. Optionally, information that does not vary between blocks is not included for obtaining an enhanced degree of data compression in the encoded output data, or is included at a higher level in the encoded output data, for example at header or sub-header level. Table 3 provides a hierarchical order of levels which are beneficially employed in the encoded output data generated by the encoder.

**Table 3: order of levels in encoded output data, from high to low**

| | |
|---|---|
| Level order | Information associated with level |
| | |
| High | Video |
| | groups of images |
| | Image |
| | groups of macro blocks |
| Medium | macro block |
| | groups of blocks |
| | Block |
| | groups of microblocks |
| Low | Microblock |
| | |

Optionally, the encoding method is operable when executed to select and to deliver information pertaining to one or more levels in the encoded output data, for example dependent upon field of application of the method, for example consumer video products, professional image compression apparatus for survey use, X-ray imaging apparatus, magnetic resonance imaging (MRA) apparatus. Similar considerations pertain to orders of levels in encoded output data when the encoding method is employed to encode audio data; there can be employed headers for audio, groups of packets, packets, sub-packets, groups of waveform segments, and waveform segment.

The encoded output data from the encoder are communicated and/or stored, and eventually are received as encoded input data to a decoder pursuant to the present invention. The decoder beneficially implements a method of decoding encoded input data pursuant to the present invention.

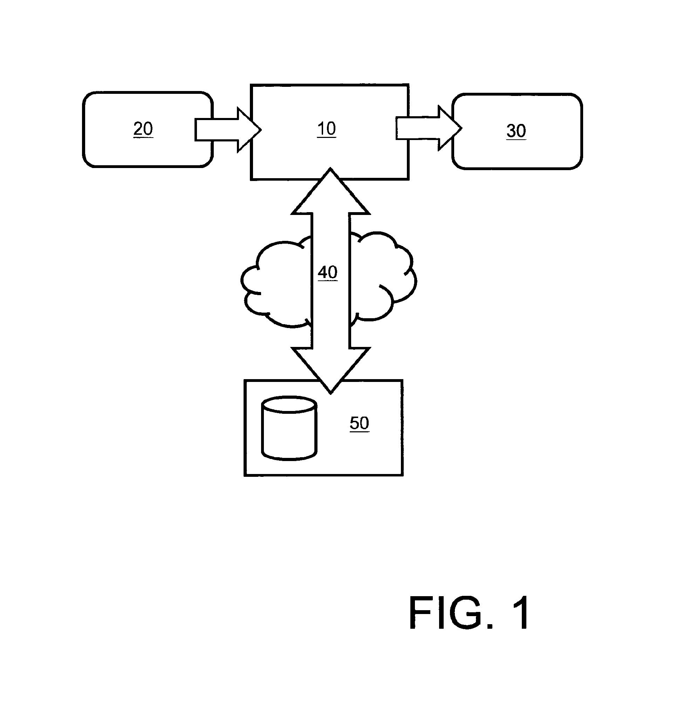

Referring to FIG. 1, there is shown an illustration of a decoder pursuant to the present invention. The decoder is denoted by **10** and is operable to receive encoded input data **20,** for example encoded output data from the aforementioned encoder, and to decode the encoded input data **20** by employing a decoding method pursuant to the present invention to generate corresponding decoded decompressed output data **30.** The output data **30** is beneficially decoded in a substantially lossless manner as aforementioned. The decoder **10** is coupled via a communication network **40** to a database arrangement **50** whereat one or more parameters, tables and/or rules for decoding the encoded input data **20** are stored. The encoded input data **20** is optionally any type of data, for example at least one of: image data, video data, audio data, economic data, mask data, seismographic data, analog-to-digital (ADC) converted data, biomedical signal data, textural data, calendar data, mathematical data, binary data but not limited thereto. Optionally, the decoder **10** is implemented to receive the encoded data from at least one of following sources: a data memory device, via a communication network, a memory card, data memory disks, local area communication networks (LANs), directly from an encoder.

In operation, the decoder **10** receives the encoded input data **20,** derives decoding information from the database arrangement **50** via the communication network **40,** and then proceeds to decode the encoded input data **20** to generate the decoded decompressed output data **30.** Optionally, the encoded input data **20** includes at least one of: encoded audio, one or more encoded images, encoded video but is not limited thereto as aforementioned. Optionally, the encoded input data **20** includes headers, encoding information as well as encoded data. The encoded input data **20** can be streamed from an encoder, for example via a communication network arrangement, or retrieved from machine-readable data storage media, for example server hard drive disk storage, portable solid-state memory devices and so forth.

The decoder **10** is beneficially implemented as hardware, for example via one or more PGLA (Programmable Gate Logic Array), via one or more software application executable upon computing hardware, or any mixture of hardware and software. The decoder **10** can be employed in multimedia products, computers, mobile telephones ("cell phones"), Internet services, video recorders, video players, communication apparatus and similar. The decoder **10** is optionally employed in conjunction with image capture systems which output encoded data, for example surveillance cameras, hospital X-ray systems, hospital MRI scanners, hospital ultrasound scanners, aerial surveillance systems and similar apparatus which generate large quantities of image data wherein lossless compression is desired so as to preserve fine information in the images whilst rendering the quantities of image data manageable for data storage purposes.

The decoder **10** is beneficially useable with known apparatus for image processing, for example in conjunction with an image/video processor as described in a published US patent application no. US2007/280355 herewith incorporated by reference, for example in conjunction with an image generator as described in a published US patent application no. US2010/0322301 herewith incorporated by reference, and for example with a pattern recognizer as described in a published US patent application no. US2011/007971 herewith incorporated by reference.

A method of decoding encoded input data using the decoder 10 of FIG. 1 will now be described with reference to FIG. 2. In FIG. 2, steps of a method of decoding encoded input data **20** are denoted by **100** to **190.**

In a first step **100,** the method of decoding includes receiving encoded input data for blocks, image, video and/or audio but not limited thereto, for example for receiving the aforesaid encoded input data **20.** In a second step **110,** executed after the first step **100,** the method includes finding and decoding header information present in the encoded input data **20,** for example parameters describing image size, one or more compression transformations which have been employed when generating the encoded input data **20,** for example RLE and/or Huffman algorithms.

In a third step **120,** executed after the second step **110,** the method optionally includes creating an initial set of blocks and/or packets for receiving decoded data from the second step **110.** Thereafter, in a fourth step **130,** the method includes analysing the decoded header data from the second step **110** to determine splits and/or combinations of blocks and/or packets, and optionally to combine information where appropriate, for example duplicating parameters which are arranged to describe content of a plurality of blocks and/or packets. In a fifth step **140** executed after the fourth step **130,** the method includes determining whether or not a given block or packet is split and/or combined; in an event that the given block or packet is not split and/or combined, the method progresses to a seventh step **160;** in an event that the given block or packet is split and/or combined, the method progresses to a sixth step **150** which is concerned with splitting blocks or packets involving a creation of one or more new blocks or packets. Upon execution of the sixth step **150,** the method progresses to a seventh step **160.**

In the seventh step **160,** the method includes processing block and/or packet information. In an eighth step **170,** executed after completion of the seventh step **160,** the method includes decoding encoded data corresponding to blocks or packets included in the encoded input data **20** by applying one or more inverse transformations whose identities are determined from the header information derived from the second step **110.** Optionally, the one or more inverse transformations are obtained by the decoder **10** communicating via the communication network **40** with the database arrangement **50,** for example a database arrangement **50** that provided transformation algorithm support for earlier encoding the encoded input data **20.** During the eighth step **170,** the blocks and/or packets generated in the third step **120,** and optionally split and/or combined in the fourth, fifth and sixth steps **130, 140, 150** respectively, are populated with decoded block and/or packet data generated in the eighth step **170,** wherein the decoded block and/or packet data optionally becomes decompressed. In the aforesaid ninth step **180,** the method includes checking for a last block, a last packet or an initial block or frame being reached; in an event that the last block and so forth is not reached, the method progresses back to the first step **100** or the fourth step **130;** in an event that the last block and so forth is reached, the method includes progressing to a tenth step **190** wherein decoding of block, packet or image or video has been completed, whereafter the method includes outputting the decoded output data **30,** namely a decoded and decompressed version of the encoded input data **20.** It is also possible to jump directly from the second step **110** to the eighth step **170,** if the header information shows that the block or image is similar than the previous block or image or the block or image is, for example, black in colour. All the decoded data that can be shown, written to the file or streamed out is beneficially generated as early as possible to avoid extra buffering and latencies.

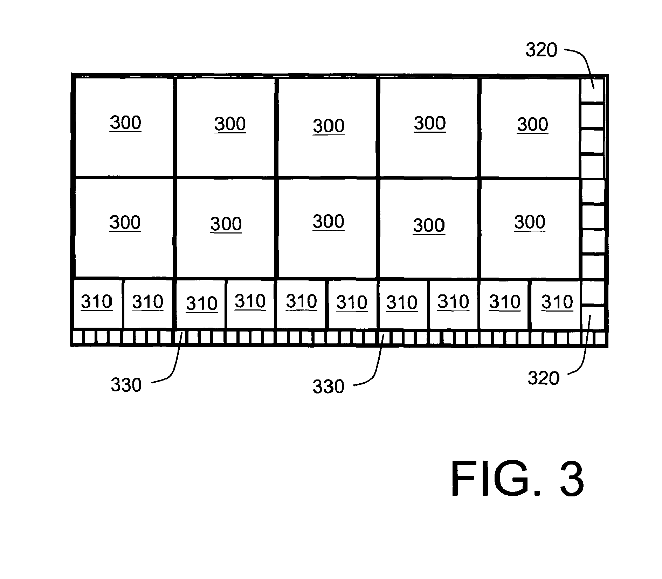

Referring next to FIG. 3, from the foregoing, it will be appreciated that the method of encoding employed to generate the encoded input data **20,** when appropriate, generates a variable block or packet size for providing an optimal solution between data compression in the encoded input data **20** and substantially lossless compression, namely substantially without discernible loss. In FIG. 3, large coding blocks **300** are employed for an upper left hand corner of a given image, whereas smaller blocks **310, 320, 330** are required along right-hand-side and lower edge areas of the image for more accurately providing encoding of these areas. In the encoded input data **20,** parameters describing image content of the blocks **300, 310, 320, 330** and the position of the blocks within the image are included in the encoded input data **20.** Beneficially, encoding method employed for encoding the blocks **300, 310, 320, 330** are also defined in the encoded output data **20,** for example different methods for different blocks **300, 310, 320, 330.**The distribution of the blocks **300, 310, 320, 330** will vary depending upon spatial distribution of content within images to be encoded. The decoder **10** is operable, for example, to cope with decoding encoded data from a scheme as depicted in FIG. 3. Optionally, the computing hardware of the encoder **10** is implemented as a plurality of data processors which are capable of operating in a concurrent manner to decode encoded data corresponding the blocks and/or packets, thereby increasing a rate at which the encoded input data **20** can be decoded to generate the decoded output data 30; for example real-time decoding of video streams thereby becomes feasible. A FIG. 3 shows example of the initial split of blocks in the image that is generated in the third step **120** of decoder, namely in the second step **110** in the encoder. This initial split of blocks does not require any information to be sent between encoder and decoder, because it can be based, for example, upon a size of the image. When the real splitting of a block is executed in the fifth step **140** in the encoder, then that information is needed to be delivered from the encoder to the decoder **10.** The decoder **10** decodes this delivered information in the fourth step **130** and does splitting, alternatively combining, of blocks or packets decision in the fifth step **140** based on that decoded information.

In the foregoing, the following abbreviations have been used as given in Table 4. These various encoding formats are all potentially relevant for use when implementing the decoder **10,** depending upon desired performance of the decoder **10.**

**Table 4: Abbreviations for decoding transformations useable when implementing embodiments of the present invention**

| | | | | |
|---|---|---|---|---|
| 1D | 1-Dimensional (e.g. for a signal or packet) | | MAD | Mean Absolute Difference |
| 2D | 2-Dimensional (e.g. for a block, image, stereo or multichannel audio) | | MP3 | MPEG-1 Audio Layer 3 |
| 3D | 3-Dimensional (e.g. for video, stereo image, multichannel image) | | MPEG | Motion Picture Experts Group |
| AAC | Advanced Audio Coding | | MSD | Mean Square Difference |
| AVC | Advanced Video Coding | | MVC | Multiview Video Encoding |
| BMP | Bitmap - file format | | PCM | Pulse Code Modulation |
| DC | Direct current | | PNG | Portable Network Graphics |
| DCT | Discrete cosine transform | | RLE | Run-Length Encoding |
| DPCM | Differential Pulse Code Modulation | | SAD | Sum of Absolute Differences |
| FLAC | Free Lossless Audio Codec | | SSD | Sum of Squares Differences |
| GIF | Graphic Interchange Format | | TIFF | Tagged Image File Format |
| JPEG | Joint Photographic Experts Group | | VLC | Variable Length Coding |
| JPEG XR | JPEG eXtended Range | | VQ | Vector Quantization |
| LZO | Lempel-Ziv transform based coding method | | EM | Entropy Modifier |
| | | | | |

The method of decoding pursuant to the invention, for example as depicted in FIG. 2, is capable of, via layer and channel encoding executed in the decoder 10, supporting interactive video presentations for providing new types of content delivery services, for example interactive commercial advertisements, different viewing perspectives when streaming live sports activities such as Formula 1 and so forth, and movies. For example, the decoder **10** allows for movies with localized subtitle layers, interactive watermarks, interactive pattern recognition, animated 2D/3D user interface (UI) buttons and so forth.

### AN EXAMPLE

A simplified example of decoding an encoded image is described. Based on embodiment decoder receives information content from encoder, for example as streamed or as file. According to the example, the information content is in a form of a file consisting of following information fields and content:
Imagesize: 120 x 80 pixels
InitialBlocksize: 40 x 40 pixels
SplitBit: 0 0 1 0000 0 1 0010 0000 1 1000 0000
MethodBits: 0 0 1 0 0 0 0 0 0 0 0 0 0 0 0 0 0 0 0 0 0
Values: 10 10 20 25 15 20 10 10 10 10 10 10 5 10 5 5 5 5 5 5 10 5 5 5

Wherein:
Imagesize describes the size of the image to be decoded. The size of the image can be arbitrary;
InitialBlocksize describes what is size of "basic" initial blocks. Depending on the implementation the InitialBlocksize can be fixed, such as 40 x 40, or it can vary, for example 20 x 20, 80 x 80, and so forth. It might not be needed to send Initialblocksize information in case using default values in decoder and encoder;
SplitBit values of "0" indicate that a given block will not be split and value "1" indicates that the given block block will be split. In case of spitting the block to sub-blocks, "1" will be followed by rules on whether to split the sub-block or not;
Methodbits describe what to do with each block. As an example, "0" can refer to a filling block with uniform colour, whereas "1" might refer to applying colour gradient to a block; and
Values describe value to be applied to each Methodbit; value can be, for example, a colour value or, for example, rules on filling gradients or for example pointer to database containing instructions on how to fill the block. In an example, a value "10" corresponds to blue, value "5" to green and values "15", "20", "25" to different intensities of red.

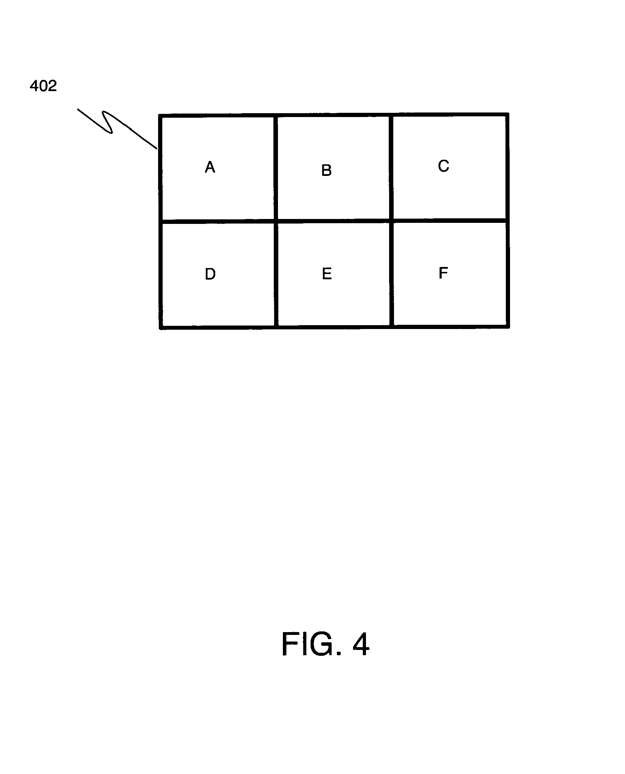

In a first step of decoding an image, an image area of 120 x 80 pixels is reserved from memory of a device whereat decoding takes place. The image area 402 is split to six 40 x 40 blocks as shown in FIG. 4. The blocks are marked with letters A, B, C, D, E and F for clarity purposes.

In a second step of decoding, the image Splitbit information content (0 0 1 0000 0 1 0010 0000 1 1000 0000) is used to split the image area 402 into further blocks.

The bit number 1 of Splitbit information content is "0" indicating that the block A will not be split further.

The bit number 2 of Splitbit information content is "0" indicating that the block B will not be split further.

The bit number 3 of Splitbit information content is "1" indicating that the block C will be split to sub-blocks.
The bit number 4 of Splitbit information content is "0" indicating that sub-block 1 (later C1) of the block C will not be split further.
The bit number 5 of Splitbit information content is "0" indicating that sub-block 2 (later C2) of the block C will not be split further.

The bit number 6 of Splitbit information content is "0" indicating that sub-block 3 (later C3) of the block C will not be split further.
The bit number 7 of Splitbit information content is "0" indicating that sub-block 4 (later C4) of the block C will not be split further.

The bit number 8 of Splitbit information content is "0" indicating that the block D will not be split further.

The bit number 9 of Splitbit information content is "1" indicating that the block E will be split to sub-blocks.
The bit number 10 of Splitbit information content is "0" indicating that sub-block 1 (later E1) of the block E will not be split further.
The bit number 11 of Splitbit information content is "0" indicating that sub-block 2 (later E2) of the block E will not be split further.
The bit number 12 of Splitbit information content is "1" indicating that the sub - lock E3 will be split to sub-blocks.
The bit number 13 of Splitbit information content is "0" indicating that sub-block 1 (later E31) of the sub block E3 will not be split further.
The bit number 14 of Splitbit information content is "0" indicating that sub-block 2 (later E32) of the sub block E3 will not be split further.
The bit number 15 of Splitbit information content is "0" indicating that sub-block 3 (later E33) of the sub block E3 will not be split further.
The bit number 16 of Splitbit information content is "0" indicating that sub-block 3 (later E34) of the sub block E3 will not be split further.
The bit number 17 of Splitbit information content is "0" indicating that sub-block 4 (later E4) of the block E will not be split further.

The bit number 18 of Splitbit information content is "1" indicating that the block F will be split to sub-blocks.
The bit number 19 of Splitbit information content is "1" indicating that the sub-block F1 will be split to sub-blocks.
The bit number 20 of Splitbit information content is "0" indicating that sub-block 1 (later F11) of the sub block F1 will not be split further.
The bit number 21 of Splitbit information content is "0" indicating that sub-block 2 (later F12) of the sub block F1 will not be split further.
The bit number 22 of Splitbit information content is "0" indicating that sub-block 3 (later F13) of the sub block F1 will not be split further.
The bit number 23 of Splitbit information content is "0" indicating that sub-block 4 (later F14) of the sub block F1 will not be split further.

The bit number 24 of Splitbit information content is "0" indicating that sub-block F2 will not be split further.
The bit number 25 of Splitbit information content is "0" indicating that sub-block F3 will not be split further.
The bit number 26 of Splitbit information content is "0" indicating that sub-block F4 will not be split further.

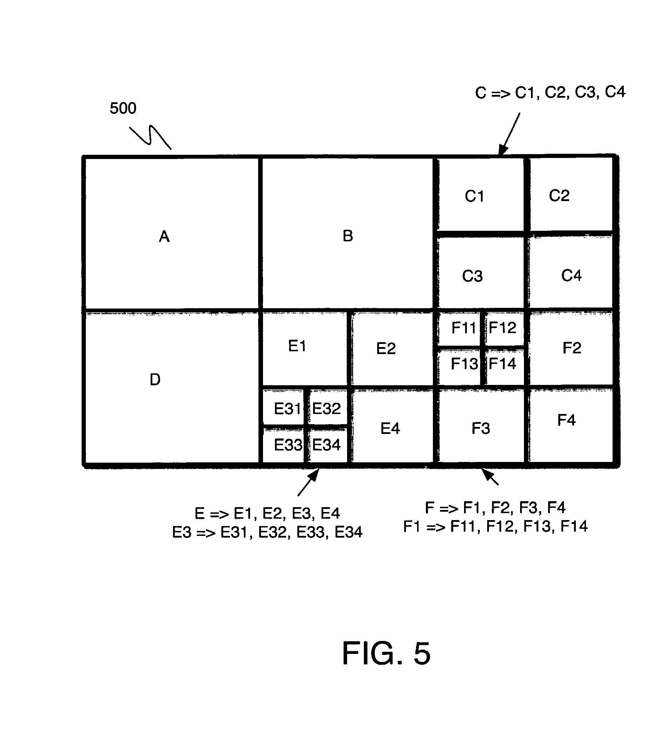

Decoding Splitbit information results on "grid" of blocks over the image area 500 as shown in FIG. 5.

In a third step, Methodbits are used in decoding process. Information content is 0 0 1 0 0 0 0 0 0 0 0 0 0 0 0 0 0 0 0 0 0. The third bit of the Methodbits is "1" indicating that the third block in the grid should be applied with gradient function. The third block is block C1 of FIG. 5. All others should be applied with constant colour as defined in decoding rules of the embodiment.

In fourth step Value information is used in decoding process. Information content is 10 10 20 25 15 20 10 10 10 10 10 10 5 10 5 5 5 5 5 5 10 5 5 5.

The first value 10 indicates colour of first block A, namely blue. The colour is applied to the block A.
The second value 10 indicates colour of second block B, namely blue. The colour is applied to the block B.

For the third block, the method provides a "gradient" of the values 20, 25, 15 and 20 which indicate colour of each corner of block C1, namely red with 20 to the top left corner, 25 to the top right corner, 15 to the bottom left corner and 20 to the bottom right corner. Gradient fill to entire block is applied using the starting values for each corner of the block C1.

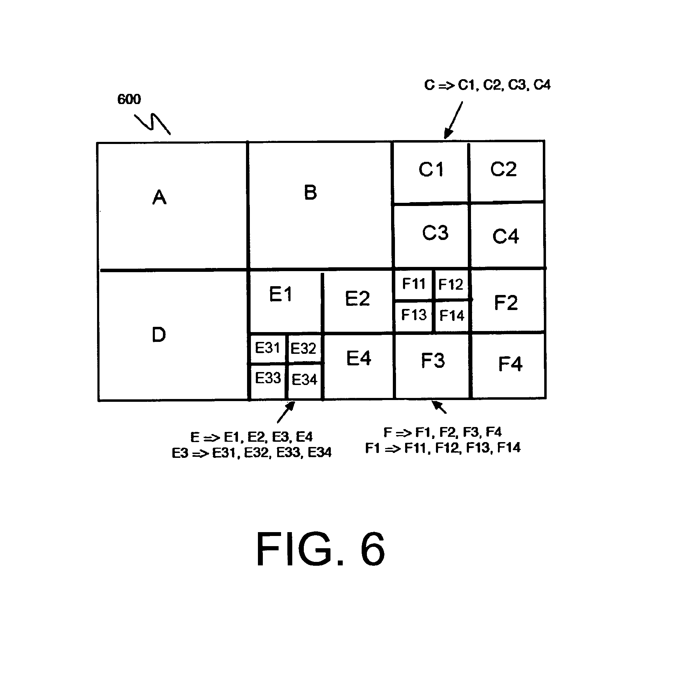

For the fourth block (C2) colour value of 10 is applied, and so forth. Each block is filled with respective colour. A resulting image 600 is shown in FIG. 6. A grid of blocks is shown in FIG. 6 for clarity purposes. In practice, for an image to be displayed to a user, such a grid would not be shown to the user.

An algorithm for implementing one or more embodiments can also include one or more databases for storing "common" combinations of block structures and colours. According to embodiment since block group E31, E32, E33 and E34 and block group F11, F12, F13 and F14 have same colour values combination and order (10, 5, 5, 5) it can be considered as one element and designed with own value (referred as Combination Value). The combination value can be stored in a database (of encoder or decoder) and called with Reference Identification number when needed. Often separate streams for values for different methods are used, for example in the previous example DC values and slide values can be set to separate streams. Some methodsoptionally have generated multiple streams by themselves to enable a smaller entropy to be achieved for each stream that enables better compression efficiency within entropy coding methods, for example by using a multilevel method wherein high and low levels can be set to separate streams, because often high values are more close to each other, similarly as low values are more close to each other, and then range coding that uses delta coded, high or low values operates very well.

### DEVICE EXAMPLE

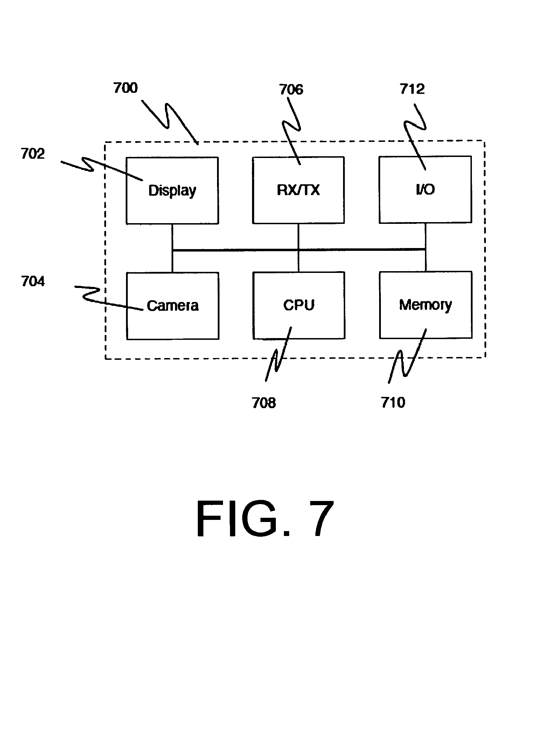

In one embodiment the decoding can be implemented in portable device **700** of FIG. 7, such as a smart phone, a digital camera or a video camera. The portable device **700** can consist of a camera **704** for capturing a image, a display **702** for showing an image, a receiver transmitter (RX/TX) **706** to enable communication using cellular networks or local area networks, other Input/Output (I/O) **712** such as Universal Serial Bus (USB) or Ethernet, a Central Processing Unit (CPU) **708** for executing decoding and encoding related algorithms and instructions and memory **710** for storing image from camera, and software for the decoding of encoded image content. The portable device **700** is optionally configured to store encoded images in its spatially local memory **710** or it can be configured to ask periodically, upon request, upon user action or in real time or close to real time encoded images via RX/TX **706** or via I/O **712** from external systems.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

## Claims

1. A method of decoding encoded input data (20) to generate corresponding decoded output data (30), **characterized in that** said method includes steps of:
(a) processing the encoded input data (20) to extract therefrom header information indicative of encoded data pertaining to blocks and/or packets included in the encoded input data (20), said header information including data indicative of one or more transformations employed to encode and compress original block and/or packet data for inclusion as the encoded data pertaining to the blocks and/or packets;
(b) preparing a data field in a data storage arrangement for receiving decoded block and/or packet content;
(c) retrieving information describing the one or more transformations and then applying an inverse of the one or more transformations for decoding the encoded and compressed original block and/or packet data to generate corresponding decoded block and/or packet content for populating said data field;
(d) splitting and/or combining blocks and/or packets in the data field according to splitting and/or combining information included in the encoded input data (20); and
(e) when the encoded input data has been at least partially decoded, outputting data from the data field as the decoded output data (30).

2. A method as claimed in claim 1, **characterized in that** the method includes providing the encoded data from at least one of following sources: a data memory device, via a communication network, a memory card, data memory disks, local area communication networks (LANs), directly from an encoder.

3. A method as claimed in claim 1 or 2, **characterized in that** the method includes fetching supplementary information from a database arrangement for use when executing said inverse of said one or more transformations, said supplementary information including at least one of: algorithms, rules, one or more transformation parameters.

4. A method as claimed in claim 4, **characterized in that** said method further includes retrieving header information from the encoded input data (20) indicative of the database arrangement for enabling decoding of the encoded input data (20) to access said supplementary information used when earlier encoding the input data (20).

5. A method as claimed in claim 1, 2, 3 or 4, **characterized in that** the method includes decoding blocks or packets including at least one of: image data, video data, audio data, economic data, mask data, seismographic data, analog-to-digital (ADC) converted data, biomedical signal data, textural data, calendar data, mathematical data, binary data, data for a temporal series of audio and/or images, wherein sub-division of the blocks or packets is dependent upon content present in preceding blocks or packets.

6. A method as claimed in anyone of preceding claims, **characterized in that** said method includes employing for said inverse of the one or more transformations inverses of one of more of: data base reference, DC-value, slide, scale, line, multilevel, unchanged, interpolation, extrapolation, DCT, pulse code modulation (PCM), DPCM, RLE, SRLE, EM, LZO, VLC, Huffman-coding, arithmetic coding, range coding, transform coding, delta coding, ODelta coding, bzip2-specific RLE.

7. A method as claimed in any one of preceding claims, **characterized in that** the method includes decoding at least one of: image data, video data, audio data, economic data, mask data, seismographic data, analog-to-digital (ADC) converted data, biomedical signal data, textural data, calendar data, mathematical data, binary data, wherein one or more these are present in the encoded input data (20).

8. A software product recorded on non-transitory machine-readable data storage media, **characterized in that** the software product is executable upon computing hardware for executing a method as claimed in any one of the preceding claims 1 to 7.

9. A software application for a mobile wireless communication device, **characterized in that** the software application includes a software product as claimed in claim 8.

10. A decoder (10) operable to decode input data (20) to generate corresponding decoded output data (30), **characterized in that** the decoder (10) includes data processing hardware which is operable:
(a) to process the encoded input data (20) to extract therefrom header information indicative of encoded data pertaining to blocks and/or packets included in the encoded input data (20), said header information including data indicative of one or more transformations employed to encode and compress original block and/or packet data for inclusion as the encoded data pertaining to the blocks and/or packets;
(b) to prepare a data field in a data storage arrangement for receiving decoded block and/or packet content;
(c) to retrieve information describing the one or more transformations and then applying an inverse of the one or more transformations for decoding the encoded and compressed original block and/or packet data to generate corresponding decoded block and/or packet content for populating said data field;
(d) to split and/or combine blocks and/or packets in the data field according to splitting and/or combining information included in the encoded input data (20); and
(e) when the encoded input data has been at least partially decoded, to output data from the data field as the decoded output data (30).

11. A decoder as claimed in claim 10, **characterized in that** the decoder is operable to fetch supplementary information from a database arrangement for use when executing said inverse of one or more transformations, said supplementary information including at least one of: algorithms, rules, one or more transformation parameters.

12. A decoder as claimed in claim 10, **characterized in that** the decoder is implemented to receive the encoded data from at least one of following sources: a data memory device, via a communication network, a memory card, data memory disks, local area communication networks (LANs), directly from an encoder.

13. A decoder as claimed in claim 10, **characterized in that** the data processing hardware is implemented using computing hardware operable to execute a software product.

14. A decoder as claimed in claim 10, 11, 12 or 13, **characterized in that** the decoder (10) is operable to use an inverse of the one or more transformations to decompress content associated with the blocks and/or packets, so that the decoded output data (30) is larger in size than the input data (20) to be decoded.

15. A decoder (10) as claimed in claim 10, 11, 12, 13 or 14, **characterized in that** the blocks and/or packets are sub-divided or combined so that at least one of their representative parameters describing their content is substantially flat within their sub-divided or combined blocks or packets.

16. A decoder (10) as claimed in claim 15, **characterized in that** said at least one parameter corresponds to a property of the sub-divided or combined blocks.

17. A decoder (10) as claimed in any one of the preceding claims 10 to 16, **characterized in that** the blocks and/or packets correspond to a series of audio and/or images, wherein sub-division of the input data (20) corresponding to a given image and/or audio to form the plurality of corresponding blocks is dependent upon content present in one or more images and/or audio preceding the given image within the temporal sequence of images and/or audio.

18. A decoder (10) as claimed in any one of the preceding claims 10 to 17, **characterized in that** the decoder (10) is operable to retrieve header information to the transformed data to generate the decoded output data (30), wherein said header information includes information indicative of said one or more transformations employed by an encoder (10) which generated the encoded input data (20).

19. A decoder (10) as claimed in claim 10, **characterized in that** said decoder (10) is operable to retrieve header information to the encoded input data (20) in a manner indicative of the database arrangement for enabling decoding of the encoded input data (20) to access said supplementary information used when earlier encoding the encoded input data (20).

20. A decoder (10) as claimed in any one of the preceding claims 10 to 19, **characterized in that** said decoder (10) is operable to employ for the inverse of the one or more transformations inverses of one of more of: data base reference, DC-value, slide, scale, line, multilevel, unchanged, interpolation, extrapolation, DCT, pulse code modulation (PCM), DPCM, RLE, SRLE, EM, LZO, VLC, Huffman-coding, arithmetic coding, range coding, transform coding, delta coding, ODelta coding, bzip2-specific RLE.

21. A decoder (10) as claimed in any one of the preceding claims 10 to 20, **characterized in that** the decoder (10) is operable to decode at least one of: image data, video data, audio data, economic data, mask data, seismographic data, analog-to-digital (ADC) converted data, biomedical signal data, textural data, calendar data, mathematical data, binary data, wherein one or more of these are present in the encoded input data (20).

22. An electronic consumer product operable to receive and/or store encoded input data, **characterized in that** said electronic consumer product includes a decoder (10) as claimed in any one of the preceding claims 10 to 21 for decoding the input data for generating corresponding decoded content for providing to at least one user of the consumer product.

23. An electronic consumer product as claimed in claim 22, **characterized in that** the electronic consumer product is at least one of: a mobile telephone, a cell phone, a tablet computer, a television, a portable media playing device, a camera, a personal computer.
